# EUROPÄISCHE PATENTSCHRIFT

(11) **EP 0 999 911 B1**
(45) Veröffentlichungstag und Bekanntmachung des Hinweises auf die Patenterteilung: **26.06.2002**
(21) Anmeldenummer: 98941343.0
(22) Anmeldetag: 16.07.1998
(51) Int. Cl.: B23D 31/00

(54) **VORRICHTUNG ZUM BRUCHTRENNEN VON STANGE UND DECKEL EINES PLEUELS**
DEVICE FOR SEPARATING THE ROD AND CAP OF A CONNECTING ROD BY BREAKING
DISPOSITIF POUR LA SEPARATION PAR RUPTURE DE LA BARRE ET DU CHAPEAU D'UNE BIELLE

(30) Priorität: 01.08.1997 DE 19733433
(43) Veröffentlichungstag der Anmeldung: 17.05.2000
(73) Patentinhaber: Alfing Kessler Sondermaschinen GmbH, 73433 Aalen (DE)
(72) Erfinder: HÄHNEL, Michael, D-73457 Essingen (DE); WISNIEWSKI, Horst, D-72762 Reutlingen (DE)
(74) Vertreter: HOFFMANN - EITLE
(86) Internationale Anmeldenummer: EP9804433
(87) Internationale Veröffentlichungsnummer: WO9906169

(56) Entgegenhaltungen:
- EP-A- 0 467 198
- EP-A- 0 568 119
- DE-A- 4 316 354
- US-A- 5 105 538

## Beschreibung

Die vorliegende Erfindung bezieht sich auf eine Vorrichtung zum Bruchtrennen von Stange und Deckel eines Pleuels gemäß dem Oberbegriff des Anspruchs 1.

Aus der EP 0 396 797 ist eine Vorrichtung zum Bruchtrennen von Stange und Deckel bekannt, die sowohl auf dem beweglichen Vorrichtungsteil als auch auf dem ortsfesten Vorrichtungsteil zustellbare Abstützelemente aufweist. Bei diesem vorbekannten Stand der Technik sind die zustellbaren Abstützelemente durch Schraubbolzen (symbolisch als Madenschrauben dargestellt) gebildet. Durch Verdrehen der Schraubenbolzen können die Abstützelemente zugestellt werden, um das zu trennende Pleuel gegen die ortsfeste und die bewegliche Spreizdornhälfte und in der Vorrichtung zu verspannen. Es hat sich gezeigt, daß ein festes, insbesondere gegen Verdrehen gesichertes Einspannen des zu brechenden Pleuels erforderlich ist, um ein definiertes Brechen ohne negative Biegeeinflüsse zu erzielen.

Mit den zustellbaren Abstützelementen ist es auch möglich, die Vorrichtung zum Bruchtrennen von Stange und Deckel eines Pleuels auf Pleuel unterschiedlicher Abmessungen einzustellen. Darüber hinaus können mit den zustellbaren Abstützelementen auch fertigungsbedingte Maßabweichungen kompensiert werden.

Um eine möglichst schnelle Anpassung zu verwirklichen, sind aus dem Stand der Technik zustellbare Abstützelemente bekannt, die über Antriebe zugestellt werden.

Sowohl bei den handbetätigten Schrauben als auch bei über Antriebe zustellbaren Abstützelementen besteht das Problem, daß die auf dem beweglichen Vorrichtungsteil vorgesehenen, zustellbaren Abstützelemente Erschütterungen und Schlägen ausgesetzt sind, die beim Brechvorgang zwangsläufig auftreten. So werden beim Brechvorgang die beiden Spreizdornhälften üblicherweise unter Zuhilfenahme eines Spreizkeiles auseinanderbewegt. Diese Bewegung und das Trennen von Stange und Deckel erfolgt ruck- bzw. schlagartig. Der bewegliche Vorrichtungsteil schlägt zudem gegen einen Anschlag, an dem die Bewegung des beweglichen Vorrichtungsteiles gestoppt wird. Insbesondere angetriebene zustellbare Abstützelemente werden bei diesem Vorgang stark beansprucht, so daß sich Funktions- und Lebensdauerprobleme ergeben.

Aus der DE-A-43 16 354 ist eine Vorrichtung zum Bruchtrennen von Stange und Deckel eines Pleuels bekannt; mit einer ortsfesten Spreizdornhälfte auf einem ortsfesten Vorrichtungsteil; mit einer beweglichen Spreizdornhälfte auf einem in Spreizrichtung beweglichen Vorrichtungsteil; mit einem zwischen den Spreizdornhälften angeordneten vortreibbaren Spreizkeil, um die beiden Spreizdornhälften in Spreizrichtung voneinander zu trennen; und mit einem auf dem beweglichen Vorrichtungsteil angeordneten festen Abstützelement für die Stange, und einem auf dem ortsfesten Vorrichtungsteil angeordneten zustellbaren Abstützelement für den Deckel.

Die US-A-5105538 offenbart eine Vorrichtung zum Bruchtrennen von Stange und ringförmigen Deckel eines Pleuels; mit einer ortsfesten Spreizdornhälfte auf einem ortsfesten Vorrichtungsteil; mit einer beweglichen Spreizdornhälfte auf einem in Spreizrichtung beweglichen Vorrichtungsteil, und mit Abstützelementen für Stange und Deckel. Das bewegliche Vorrichtungsteil ist zur Aufnahme des Deckels und das ortsfeste Vorrichtungsteil zur Aufnahme der Stange ausgelegt. Das Abstützelement der Stange wird durch einen Schlitten mit einer nutenartigen Aussparung gebildet, die gegen den Außenumfang des augenförmigen freien Endes der Stange anlegbar ist. Bei dem Abstützelement für den Deckel handelt es sich um ein einzelnes, an dem beweglichen Vorrichtungsteil angeordnetes zustellbares elastisches Abstützelement, das in Pleuellängsrichtung mittig auf den Außenumfang des Deckels wirkt. Die Vorrichtung verfügt ferner über zwei auf der dem Deckel-Abstützelement gegenüberliegenden Seite, d.h. am ortsfesten Vorrichtungsteil, angeordnete seitliche Unterstützungselemente, von denen das eine feststehend und das andere seitlich an eine laterale Anschlagfläche des Deckels zustellbar und elastisch an diese anlegbar ist. Im Bereich des feststehenden Unterstützungselementes ist das ortsfeste Vorrichtungsteil abgeschrägt, so daß es teilweise über die ringförmige Kontur des Deckels ragt, ohne diesen jedoch zu berühren. Die Vorrichtung verfügt ferner über zwei an dem beweglichen Vorrichtungsteil und beidseitig des elastischen Deckel-Abstützelementes fix angeordnete, einander gegenüberliegende seitliche Anschläge bzw.
Begrenzungselemente. Diese Anschläge liegen nicht an dem bruchzutrennenden Bauteil an, sondern werden zunächst in einem geringen Abstand vor dem Deckel positioniert, so daß sie erst unmittelbar nach dem Brechvorgang als Anschlag für zwei Schulterbereiche des abgetrennten Teils des Deckels fungieren und eine weitere Fortbewegung des abgetrennten Deckelteils begrenzen. Die seitlichen Anschläge sind nur gemeinsam zustellbar. Ihre Zustellung kann jedoch unabhängig von der Zustellung des elastischen Anschlags erfolgen. Die dem Deckel zugewandten Enden der seitlichen Anschläge sind abgeschrägt, so daß sie einen seitlichen Rundungsbereich des Deckels berührungsfrei zwischen sich aufnehmen und teilweise überragen. Bei dieser Vorrichtung erfolgt die eigentliche Abstützung bzw. Einspannung des Pleuels also lediglich über die nutenartige Aussparung für das Stangenende und das einzelne elastische Deckel-Abstützelement. Die seitlichen Unterstützungselement dienen gewissermaßen nur der seitlichen Stabilisierung. Die seitlichen Anschläge fungieren nur als Begrenzungselemente oder Stopper für den abgetrennten Deckelteil.

Der vorliegenden Erfindung liegt die Aufgabe zugrunde, eine Vorrichtung zum Bruchtrennen von Stange und Deckel eines Pleuels zu schaffen, die ohne Funktionsprobleme eine lange Lebensdauer aufweist und mit der Stange und Deckel eines Pleuels mit hoher Präzision voneinander getrennt werden können.

Diese Aufgabe wird erfindungsgemäß durch eine Vorrichtung mit den Merkmalen des Anspruchs 1. gelöst. Weitere vorteilhafte Augestaltungsmerkmale der erfindungsgemäßen Vorrichtung sind Gegenstand der Unteransprüche.

Der Erfindung liegt der Gedanke zugrunde, die von Natur aus technisch empfindlicheren, zustellbaren Abstützelemente an dem ortsfesten Vorrichtungsteil vorzusehen und damit funktionelle und die Lebensdauer betreffende Probleme möglichst weitgehend zu reduzieren. Dies ist insbesondere beim Einsatz von über Antriebe zustellbaren Abstützelementen von Bedeutung. Diese sind üblicherweise mit pneumatischen oder hydraulischen Zylindern oder mit elektrischen Antrieben ausgestattet, die nicht nur selbst gegen Stöße empfindlich sind, sondern zur Versorgung und Steuerung mit flexiblen Zuleitungen bzw. Ableitungen ausgestattet sein müssen. Flexible Zu- bzw. Ableitungen für pneumatische, hydraulische oder elektrische Antriebe sind jedoch besonders stoßempfindlich und werden von zyklischen Hin- und Herbewegungen besonders beansprucht. Die erfindungsgemäße Anordnung dieser Teile auf dem ortsfesten Vorrichtungsteil vermeidet daraus resultierende Belastungen und zumindest den Einfluß unmittelbarer Stöße oder Schläge, die insbesondere für Schlauchleitungen und elektrische Leitungen schädlich sind.

Da der Deckel von Pleueln stets äußere Auflageflächen für die Pleuelschrauben aufweist, mit denen Stange und Deckel verbunden werden, kann der Deckel an diesen Auflageflächen besonders wirkungsvoll abgestützt werden. Dementsprechend wird mit einer bevorzugten Ausgestaltung der vorliegenden Erfindung vorgeschlagen, daß der ortsfeste Vorrichtungsteil zur Aufnahme für den Deckel und der bewegliche Vorrichtungsteil zur Aufnahme für die Stange eingerichtet ist.

Dabei ist die Stange besonders einfach und wirkungsvoll in der Vorrichtung gehalten, wenn zumindest ein festes Abstützelement durch einen Fixierdorn gebildet ist, auf den die Kolbenbolzenbohrung der Stange aufschiebbar ist.

Alternativ kann das feste Abstützelement auch durch eine Ausnehmung gebildet werden, an der geeignete Bereiche der Außenfläche des Stangenendes zumindest teilweise anlegbar sind.

Eine besonders wirkungsvolle Betätigung der zustellbaren Abstützelemente wird dadurch geschaffen, daß diese an mindestens einem Keilelement anliegen, das im wesentlichen quer zur Zustellbewegung verschiebbar ist. Mit einer derartigen Ausgestaltung kann eine bei Belastung besonders starre Anordnung erzielt werden.

Vorteilhaft ist es dabei, zwei Abstützelemente vorzusehen und jedem Abstützelement ein Keilelement zuzuordnen. Dadurch ist es möglich, die Vorteile einer Betätigung durch einen Keil zu nutzen und gleichzeitig das Pleuel an zwei gegenüberliegenden Stellen sicher einzuspannen.

Eine aufeinander abgestimmte Zustellbewegung und somit ein gleichförmiges Einspannen des zu brechenden Pleuels kann dadurch erzielt werden, daß die beiden Keilelemente Keilflächen mit identischem Neigungswinkel aufweisen. Bei einer derartigen Ausgestaltung wird beim Verschieben beider Keilelemente um denselben Betrag bei beiden Abstützelementen ein identischer Zustellbetrag erzielt.

Demgegenüber können fertigungsbedingte Maßabweichungen des abzustützenden Pleuelteils dadurch kompensiert werden, daß zwei zustellbare Abstützelemente vorgesehen sind, die unabhängig voneinander zustellbar sind. Durch die beiden unabhängig voneinder zustellbaren Abstützelemente kann jedes fest einzuspannende Pleuelteil individuell eingestellt werden.

Eine Selbstzentrierung durch Betätigung der Keilelemente wird auf einfache Weise dadurch erzielt, daß die Keilflächen der Keilelemente in entgegengesetzter Neigungsrichtung angeordnet sind und daß ein hydraulischer oder pneumatischer Zylinder vorgesehen ist, dessen Stirnfläche mit dem einen Keilelement und dessen Kolben mit dem anderen Keilelement in Wirkverbindung steht.

Eine besonders wirkungsvolle Betätigung der zustellbaren Abstützelemente kann jedoch auch durch unmittelbar einwirkende Hydraulikzylinder erzielt werden. So können die Abstützelemente in einem solchen Fall jeweils mit der Kolbenstange eines Abstützkolbens verbunden sein. Diese Verbindung kann vorteilhafterweise derart ausgestaltet sein, daß die Abstützelemente jeweils unmittelbar am vorderen Ende der Kolbenstange der Kolben angeordnet sein können.

Für die Beschickung von Bruchtrennvorrichtungen mit Pleueln existieren im Stand der Technik eine Vielzahl von Vorschlägen. Eine Weiterbildung im Sinne der Aufgabe der vorliegenden Erfindung wird jedoch mit einer derartigen Beschickungsvorrichtung erzielt, mit der die Bruchtrennvorrichtung im wesentlichen feststeht, während die Pleuel in diese eingesetzt werden. Bei einer derartigen Ausgestaltung können die pneumatischen oder hydraulischen Zylinder oder die elektrischen Antriebe einschließlich der zur Versorgung und Steuerung notwendigen Zuleitungen bzw. Ableitungen feststehen, während die Beschickung ausschließlich über eine Bewegung der Pleuel realisiert wird.

Für die Beschickung stehen grundsätzlich zwei Möglichkeiten offen. So kann über der feststehenden Vorrichtung eine Transporteinrichtung angeordnet werden, über die die Pleuel in die Vorrichtung von oben einsetzbar und nach erfolgtem Bruchvorgang wieder nach oben entnehmbar sind.

Bei der anderen Möglichkeit wird unter der feststehenden Vorrichtung eine Takt-Transport-Einrichtung vorgesehen, aus der die Pleuel nach oben in die Vorrichtung ausgehoben, in dieser während des Bruchvorganges gehalten und danach wieder in diese abgesenkt werden.

Um die empfindlichen Antriebe einschließlich der Zuleitungen bzw. Ableitungen auch vor indirekten Stößen zu schützen, ist es ferner zweckmäßig, einen Maschinenständer vorzusehen, auf dem die Vorrichtung über Dämpfungselemente angeordnet ist.

Im folgenden sind zur weiteren Erläuterung und zum besseren Verständnis zwei Ausführungsbeispiele der Erfindung unter Bezugnahme auf die beigefügten Zeichnungen näher beschrieben und erläutert.
- Fig. 1: zeigt schematisch eine teilweise geschnittene Draufsicht auf ein erstes Ausführungsbeispiel der erfindungsgemäßen Vorrichtung,
- Fig. 2: zeigt schematisch eine teilweise geschnittene Detailansicht eines zweiten Ausführungsbeispiels der erfindungsgemäßen Vorrichtung, und
- Fig. 3: zeigt schematisch eine teilweise geschnittene Draufsicht auf ein drittes Ausführungsbeispiel der erfindungsgemäßen Vorrichtung.

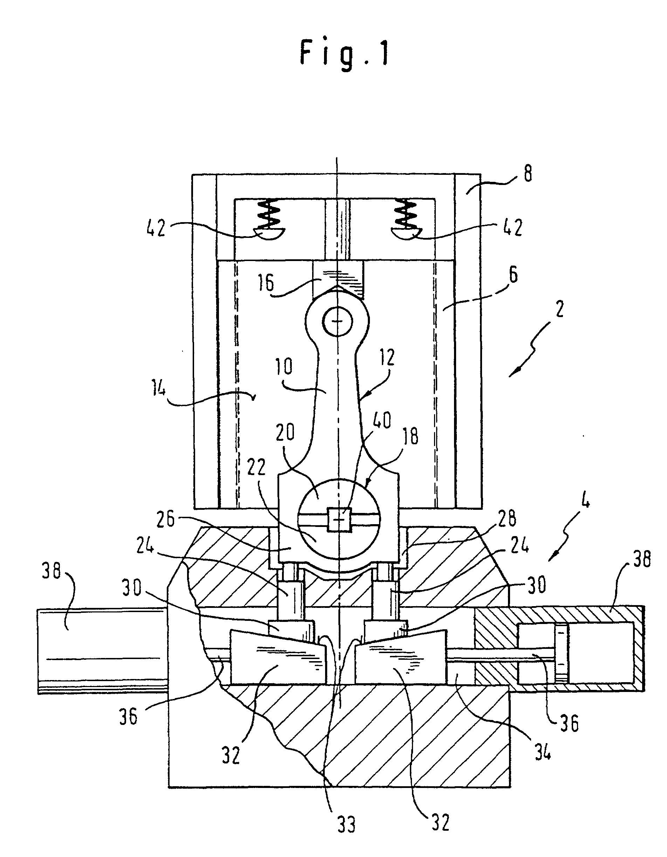

Das in Fig. 1 dargestellte erste Ausführungsbeispiel einer erfindungsgemäßen Vorrichtung weist ein bewegliches Vorrichtungsteil 2 und ein ortsfestes Vorrichtungsteil 4 auf. Das bewegliche Vorrichtungsteil 2 ist über schematisch dargestellte Führungen 6 in Längsrichtung auf einem Rahmen 8 geführt, so daß das bewegliche Vorrichtungsteil 2 wie ein Schlitten auf dem Rahmen 8 hin- und herbewegt werden kann. Der Rahmen 8 sowie der ortsfeste Vorrichtungsteil 4 sind auf einem nicht dargestellten, gemeinsamen Ständer befestigt und gehalten.

Auf dem beweglichen Vorrichtungsteil 2 ist eine Stange 10 eines zu trennenden Pleuels 12 gehalten. Hierzu weist der bewegliche Vorrichtungsteil 2 eine im wesentlichen ebene Haltefläche 14 auf, auf der das Pleuel 12 aufliegt. Weiterhin weist der bewegliche Vorrichtungsteil ein Abstützelement auf, das im vorliegenden Fall durch einen Prismenhalter 16 gebildet ist, dessen Halteflächen zumindest teilweise an der Außenfläche des kleinen Pleuelauges der Stange 10 anliegen. Alternativ kann die Stange 10 durch einen feststehenden Bolzen, der in die Bohrung des kleinen Pleuelauges hineinragt, gegen Verdrehen gesichert werden.

Im Eingriff mit einem Auge 18 des Pleuels 12 stehen zwei Spreizdornhälten 20, 22. Die Spreizdornhälfte 20 ist an dem beweglichen Vorrichtungsteil 2 befestigt und überragt die Haltefläche 14. Dementsprechend ist das zu trennende Pleuel 12 im Bereich der Stange einerseits an dem die Haltefläche 14 überragenden Prismenhalter 16 und andererseits an der Spreizdornhälfte 20 gehalten.

An dem ortsfesten Vorrichtungsteil 4 ist das zu brechende Pleuel 12 zwischen der Spreizdornhälfte 22 und zwei mit Abstand zueinander angeordneten, zustellbaren Abstützelementen, die im vorliegenden Beispiel durch zwei in Längsrichtung des zu brechenden Pleuels 12 geführte Bolzen 24 gebildet sind, eingespannt. Wie der Darstellung in Fig. 1 zu entnehmen ist, greifen die beiden Bolzen 24 an Auflageflächen eines Deckels 26 des Pleuels 12 an. Diese Auflageflächen werden bei späterer Montage des Pleuels 12 zum Zusammenfügen von Stange und Deckel als Auflagen für Köpfe von Befestigungsschrauben benötigt.

Es ergibt sich aus der Darstellung gemäß Fig. 1, daß der Deckel 26 des Pleuels 12 lediglich zwischen der Spreizdornhälfte 22 und den beiden Bolzen 24 gespannt ist.

Ansonsten weist der ortsfeste Vorrichtungsteil 4 im Bereich des Deckels eine Aussparung 28 auf, in die der Deckel 26 des Pleuels 12 bei zurückgezogenen Bolzen 24 ohne Probleme eingesetzt werden kann.

Während die vordere Stirnseite der zustellbaren Bolzen 24 an dem Deckel 26 anliegt, sind die hinteren Enden der Bolzen 24 zu einem Kontaktstück 30 verbreitert, das jeweils an einem Keilelement 32 über dessen Keilfläche 33 anliegt. Jedes Keilelement 32 ist in einer im wesentlichen senkrecht zur Längsachse des Pleuels 12 verlaufenden Ausnehmung 34 verschiebbar gehalten und an der Oberfläche der Ausnehmung 34 gegen das ortsfeste Vorrichtungsteil 4 abgestützt. Jedes Keilelement 32 steht über eine Kolbenstange 36 mit einem doppelseitigen, hydraulischen Zylinder 38 in Wirkverbindung.

Zum Trennen von Stange 10 und Deckel 26 eines Pleuels 12 wird dieses mit seinem Auge 18 über die benachbarten Spreizdornhälften 20, 22 geschoben. Das Pleuel 12 ist dabei derart ausgerichtet, daß die Außenfläche des Stangenendes in den Prismenhalter 16 eingeschoben wird.

Danach erfolgt das Einspannen des Pleuels 12. Hierzu werden die Hydraulikzylinder 38 angesteuert, so daß sich die beiden Keilelemente 32 aufeinander zu bewegen. Die Kontaktstücke 30 gleiten auf der geneigten Keilfläche 33. Dadurch werden die geführten Bolzen 24 in Richtung auf das Pleuel 12 zugestellt. Aufgrund der Festlegung des Pleuels zwischen dem Prismenhalter 16 und den beiden Spreizdornhälften 20, 22 ist das Pleuel derart angeordnet, daß die vorderen Stirnseiten der Bolzen 24 gegen die Auflageflächen des Deckels 26 gedrückt werden.

Zum gleichmäßigen Einspannen des Pleuels zwischen der Spreizdornhälfte 22 und den Bolzen 24 können die hydraulischen Zylinder 38 einzeln angesteuert werden. Indem der Innendruck in jedem hydraulischen Zylinder 38 ermittelt wird, kann die jeweilige Kraft, mit der jeder Bolzen 24 gegen den Deckel 26 drückt, geregelt werden. Durch diese Maßnahme ist eine gleichmäßige Einspannung des Pleuels 12 möglich.

Nachdem das Pleuel 12 in die Vorrichtung eingelegt und über die Bolzen 24 darin eingespannt worden ist, erfolgt das eigentliche Trennen in vorbekannter Weise. Hierzu wird ein zwischen den Spreizdornhälften 20, 22 angeordneter Spreizkeil 40 vorgetrieben, um die beiden Spreizdornhälften 20, 22 voneinander zu trennen. Beim Versagen der Verbindungsstelle zwischen Stange 10 und Deckel 26 entfernt sich der bewegliche Vorrichtungsteil 2 ruckartig von dem ortsfesten Vorrichtungsteil 4. Diese Bewegung wird durch gefederte Anschläge 42 aufgefangen, die an dem Rahmen 8 befestigt sind.

Das nunmehr getrennte Pleuel kann aus der Vorrichtung entnommen werden. Dabei werden die Keilelemente 32 über die hydraulischen Zylinder 38 zurückgestellt, um die Verspannung des Deckels 26 aufzuheben. Die Stange 10 sowie der Deckel 26 können nun maschinell oder manuell aus der Vorrichtung herausgehoben werden.

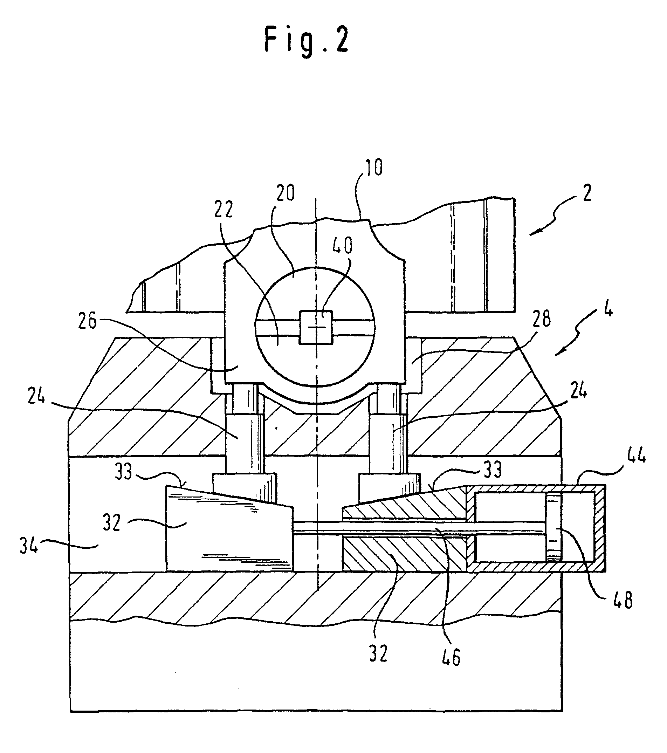

In Fig. 2 ist ein vergrößerter Teilbereich eines zweiten Ausführungsbeispiels der vorliegenden Erfindung dargestellt. Gleiche Bauteile sind in Fig. 2 mit den gleichen Bezugszeichen versehen wie in Fig. 1.

Das in Fig. 2 gezeigte Ausführungsbeispiel unterscheidet sich im wesentlichen von dem in Fig. 1 gezeigten Ausführungsbeispiel dadurch, daß die beiden Keilelemente 32 über einen gemeinsamen, hydraulischen Zylinder 44 angetrieben werden. Bei dem in Fig. 2 gezeigten Ausführungsbeispiel ist der hydraulische Zylinder 44 fest mit einem Keilelement 32 verbunden, wohingegen das andere Keilelement 32 durch eine durch das erste Keilelement hindurchragende Kolbenstange 46, die mit einem in dem Zylinder 44 abgedichteten Kolben 48 verbunden ist, mit dem hydraulischen Zylinder 44 in Wirkverbindung steht.

Die beiden Keilflächen 33 haben bei dem gezeigten Ausführungsbeispiel einen identischen Neigungswinkel mit Bezug auf die Gleitebene der Keilelemente 32. Darüber hinaus sind die Keilelemente in entgegengesetzter Neigungsrichtung zueinander angeordnet.

Beim Zustellen der Bolzen 24 zum Einspannen des Deckels 26 werden die beiden Keilelemente 32 aufeinander zu bewegt, wobei diese Zustellung mit lediglich dem einen hydraulischen Zylinder 44 bewirkt werden kann. Aufgrund der Geometrie des hydraulischen Zylinders 44 wirkt dabei eine im wesentlichen identische Zustellkraft auf die beiden Keilelemente 32. Durch diese einfache konstruktive Maßnahme wird somit erzielt, daß jeder der beiden Bolzen 24 mit identischer Kraft gegen den Deckel 26 anliegt.

Um die Verspannung des Deckels 26 nach dem Trennen von Stange 10 und Deckel 26 aufzuheben, werden die beiden Keilelemente 32 durch Betätigen des Zylinders 44 voneinander weggedrückt. Nicht dargestellte Anschläge, die diese Bewegung der Keilelemente 32 begrenzen, verhindern, daß lediglich ein Keilelement verschoben wird, während das andere Keilelement an seinem Platz verbleibt. Dadurch wird sichergestellt, daß sich beide Bolzen 24 von der Spreizdornhälte 22 entfernen, um das Einlegen eines neuen Pleuels zu ermöglichen.

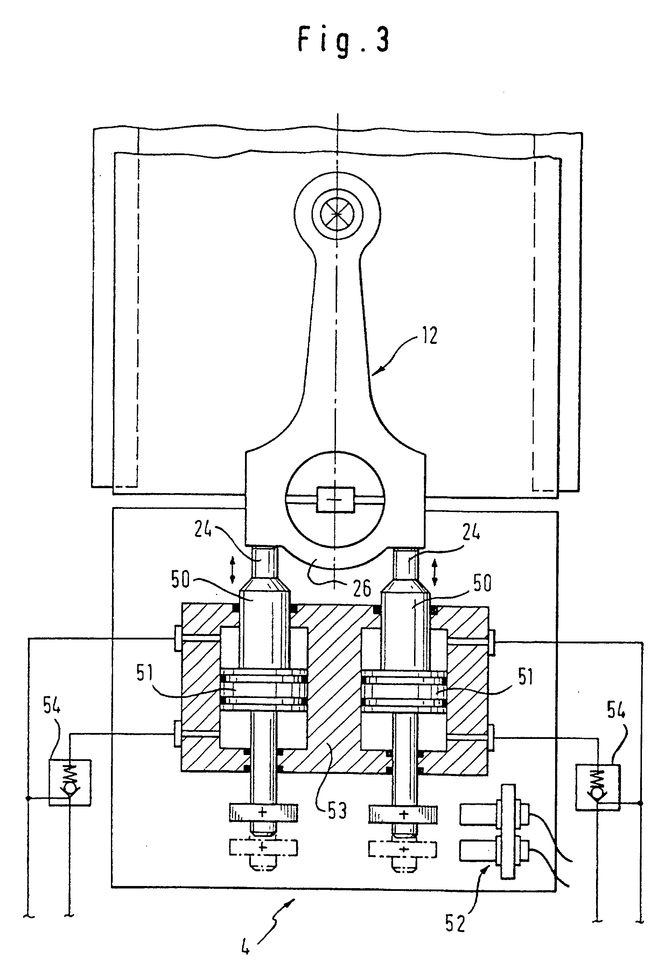

Das in Fig. 3 dargestellte dritte Ausführungsbeispiel umfaßt Abstützelemente 24 in Form von Bolzen, die jeweils unmittelbar am vorderen Ende von Kolbenstangen 50 von hydraulischen Abstützkolben 51 angeordnet sind.

Die Stellung der Kolben wird von einer Sensoreinrichtung 52 erfaßt, die in Fig. 3 lediglich schematisch dargestellt ist.

Die Kolbenstangen 50 und die Kolben 51 sind in einem Zylindergehäuse 53 gelagert, das auf dem ortsfesten Vorrichtungsteil 4 angeordnet ist.

Die Abstützelemente 24 werden beim Brechvorgang durch kontrollierten Hydraulikdruck in Anlage an dem Deckel 26 des Pleuels 12 gehalten. Ein Zurückweichen der Abstützelemente 24 beim Brechvorgang wird jeweils durch ein gesteuertes Rückschlagventil 54 sichergestellt, das dicht an dem Zylindergehäuse 53 angeordnet ist.

## Patentansprüche

1. Vorrichtung zum Bruchtrennen von Stange (10) und Deckel (26) eines Pleuels (12),
- mit einer ortsfesten Spreizdornhälfte (22) auf einem ortsfesten Vorrichtungsteil (4),
- mit einer beweglichen Spreizdornhälfte (20) auf einem in Spreizrichtung beweglichen Vorrichtungsteil (2),
- mit einem zwischen den Spreizdornhälften (20, 22) angeordneten vortreibbaren Spreizkeil (40), um die beiden Spreizdornhälften (20, 22) in Spreizrichtung voneinander zu trennen, und
- mit einem auf dem beweglichen Vorrichtungsteil (2) angeordneten festen Abstützelement(16) für die Stange (10), und einem auf dem ortsfesten Vorrichtungsteil (4) angeordneten zustellbaren Abstützelement für den Deckel (26),
**dadurch gekennzeichnet, daß**
- für den Deckel (26) zwei unabhängig voneinander zu betätigende zustellbare Abstützelemente (24) vorgesehen sind, die jeweils an mindestens einem (32) von zwei einander gegenüberliegenden Keilelementen (32, 32) anliegen, die zur Betätigung der Abstützelemente (24) im wesentlichen quer zur Zustellbewegung der Abstützelemente (24) aufeinander zu und voneinander weg verschiebbar sind.

2. Vorrichtung nach Anspruch 1,
**dadurch gekennzeichnet, daß**
das ortsfeste Vorrichtungsteil (4) zur Aufnahme für den Deckel (26) und das bewegliche Vorrichtungsteil (2) zur Aufnahme für die Stange (10) eingerichtet ist.

3. Vorrichtung nach Anspruch 2,
**dadurch gekennzeichnet, daß**
das feste Abstützelement durch einen Fixierdorn gebildet ist, auf den die Kolbenbolzenbohrung der Stange (12) aufschiebbar ist.

4. Vorrichtung nach Anspruch 2,
**dadurch gekennzeichnet, daß**
das feste Abstützelement eine Ausnehmung aufweist, an der zumindest Bereiche der Außenfläche des Stangenendes anlegbar sind.

5. Vorrichtung nach Anspruch 1,
**dadurch gekennzeichnet, daß**
die beiden Keilelemente (32) Keilflächen (33) mit identischem Neigungswinkel aufweisen.

6. Vorrichtung nach Anspruch 5,
**dadurch gekennzeichnet, daß**
die Keilflächen (33) der Keilelemente (32) in entgegengesetzter Neigungsrichtung angeordnet sind und daß ein hydraulischer Zylinder vorgesehen ist, dessen eine Stirnfläche mit dem einen Keilelement (32) und dessen Kolben (84) mit dem anderen Keilelement (32) in Wirkverbindung steht.

7. Vorrichtung nach Anspruch 1 oder 6,
**dadurch gekennzeichnet, daß**
die Abstützelemente (24) jeweils mit der Kolbenstange (50) eines Abstützkolbens (51) verbunden sind.

8. Vorrichtung nach Anspruch 7,
**dadurch gekennzeichnet, daß**
die Abstützelemente (24) jeweils unmittelbar am vorderen Ende der Kolbenstange (50) angeordnet sind.

9. Vorrichtung nach einem oder mehreren der vorhergehenden Ansprüche,
**dadurch gekennzeichnet,**
**daß** ein Maschinenständer vorgesehen ist, auf dem die Vorrichtung über Dämpfungselemente angeordnet ist.

10. Vorrichtung nach einem oder mehreren der vorhergehenden Ansprüche,
**dadurch gekennzeichnet, daß**
über der feststehenden Vorrichtung eine Transporteinrichtung angeordnet ist, über die die Pleuel in die Vorrichtung von oben einsetzbar und wieder nach oben entnehmbar sind.

11. Vorrichtung nach einem oder mehreren der vorhergehenden Ansprüche,
**dadurch gekennzeichnet, daß**
unter der feststehenden Vorrichtung eine Takt-Transport-Einrichtung angeordnet ist, aus der die Pleuel nach oben in die Vorrichtung ausgehoben, in dieser während des Bruchvorganges gehalten und danach wieder in diese abgesenkt werden.

12. Vorrichtung nach Anspruch 1,
**dadurch gekennzeichnet, daß**
die zwei einander gegenüberliegenden Keilelemente (32, 32) in einer im wesentlichen senkrecht zur Längsachse des Pleuels (12) verlaufenden Ausnehmung (34) verschiebbar gehalten und an der Oberfläche der Ausnehmung (34) gegen das ortsfeste Vorrichtungsteil (4) abgestützt sind.

13. Vorrichtung nach einem oder mehreren der vorhergenannten Ansprüche,
**dadurch gekennzeichnet, daß**
ein hinteres, dem Deckel (26) abgewandtes Ende eines jeweiligen zustellbaren Abstützelementes (24) zu einem Kontaktstück (30) verbreitert ist, das an einem zugeordneten Keilelement (32) über dessen Keilfläche (33) anliegt.

14. Vorrichtung nach Anspruch 13,
**dadurch gekennzeichnet, daß**
das Kontaktstück (30) gleitend an der Keilfläche (33) anliegt.

15. Vorrichtung nach einem oder mehreren der vorhergenannten Ansprüche,
**dadurch gekennzeichnet, daß**
die beiden einander gegenüberliegenden Keilelemente (32) über einen gemeinsamen, hydraulischen Zylinder (44) angetrieben sind.

## Claims

1. Apparatus for fracture separation of rod (10) and bearing cap (26) of a connecting rod (12),
- with a stationary half (22) of an expansion mandrel on a stationary portion (4) of the apparatus,
- with a movable half (20) of an expansion mandrel on a movable portion (2) of the apparatus,
- with an expansion wedge (40) which is arranged between the halves (20, 22) of the expansion mandrel and can be advanced, for separating the two halves (20, 22) of the expansion mandrel from each other in the direction of expansion, and
- with a fixed support element (16) for the rod (10) arranged on the movable portion (2) of the apparatus, and an adjustable support element for the bearing cap (26) arranged on the stationary portion (4) of the apparatus,
**characterised in that**
- for the bearing cap (26) there are provided two adjustable support elements (24) which are to be operated independently of each other and which in each case abut against at least one (32) of two mutually opposed wedge elements (32, 32) which for operation of the support elements (24) are displaceable towards and away from each other essentially transversely to the adjusting movement of the support elements (24).

2. Apparatus according to claim 1, **characterised in that** the stationary portion (4) of the apparatus is designed for receiving the bearing cap (26) and the movable portion (2) of the apparatus is designed for receiving the rod (10).

3. Apparatus according to claim 2, **characterised in that** the fixed support element is formed by a fixing mandrel over which the gudgeon pin hole of the rod (12) can be fitted.

4. Apparatus according to claim 2, **characterised in that** the fixed support element comprises a recess to which can be applied at least regions of the outer surface of the rod end.

5. Apparatus according to claim 1, **characterised in that** the two wedge elements (32) comprise wedge surfaces (33) with an identical angle of inclination.

6. Apparatus according to claim 5, **characterised in that** the wedge surfaces (33) of the wedge elements (32) are arranged in opposite directions of inclination and **in that** there is provided a hydraulic cylinder of which one end face is operatively connected with one wedge element (32) and of which the piston (84) is operatively connected with the other wedge element (32).

7. Apparatus according to claim 1 or 6, **characterised in that** the support elements (24) are in each case connected to the piston rod (50) of a support piston (51).

8. Apparatus according to claim 7, **characterised in that** the support elements (24) are in each case arranged directly at the front end of the piston rod (50).

9. Apparatus according to one or more of the preceding claims, **characterised in that** there is provided a machine stand on which the apparatus is mounted by means of damping elements.

10. Apparatus according to one or more of the preceding claims, **characterised in that** above the stationary apparatus is arranged a transport device by which the connecting rods can be inserted in the apparatus from above and removed again upwardly.

11. Apparatus according to one or more of the preceding claims, **characterised in that** below the stationary apparatus is arranged a cyclic transport device from which the connecting rods are lifted out upwardly into the apparatus, held in the latter during the fracture operation and then lowered back into it.

12. Apparatus according to claim 1, **characterised in that** the two mutually opposed wedge elements (32, 32) are held slidably in a recess (34) running essentially perpendicularly to the longitudinal axis of the connecting rod (12) and supported against the stationary portion (4) of the apparatus at the surface of the recess (34).

13. Apparatus according to one or more of the preceding claims, **characterised in that** a rear end, facing towards the bearing cap (26), of a respective adjustable support element (24) widens into a contact piece (30) which abuts against an associated wedge element (32) over the wedge surface (33) thereof.

14. Apparatus according to claim 13, **characterised in that** the contact piece (30) abuts against the wedge surface (33) in sliding relationship.

15. Apparatus according to one or more of the preceding claims, **characterised in that** the two mutually opposed wedge elements (32) are driven by a common hydraulic cylinder (44).

## Revendications

1. Dispositif pour séparer par rupture la tige (10) et le chapeau (26) d'une bielle (12), comportant,
- une moitié fixe (29) de mandrin d'écartement sur une partie fixe (4) du dispositif,
- une moitié mobile (20) du mandrin d'écartement sur une partie (2) du dispositif, mobile dans la direction d'écartement,
- un coin d'écartement (40) qui est disposé entre les moitiés (20, 22) du mandrin d'écartement et que l'on peut faire avancer, pour séparer l'une de l'autre les deux moitiés (20, 22) du mandrin d'écartement, dans la direction d'écartement, et
- un élément d'appui fixe (16) monté sur la partie mobile (2) du dispositif pour la tige (10), et un élément d'appui, qui est disposé sur la partie fixe (4) du dispositif et que l'on peut faire avancer, pour le chapeau (26),
**caractérisé en ce que**
- pour le chapeau (26) il est prévu deux éléments d'appui (24) que l'on peut actionner indépendamment l'un de l'autre et que l'on peut faire avancer et qui s'appliquent respectivement contre au moins l'un (32) de deux éléments en coin (32, 32) qui sont situés en vis-à-vis l'un de l'autre et qui, pour l'actionnement des éléments d'appui (24), peuvent être rapprochés et écartés l'un de l'autre, essentiellement transversalement par rapport au déplacement d'avance des éléments d'appui (24).

2. Dispositif selon la revendication 1, **caractérisé en ce que** la partie fixe (4) du dispositif est conçue pour la réception du chapeau (26) et de la partie mobile (2) du dispositif pour loger la tige (10).

3. Dispositif selon la revendication 2, **caractérisé en ce que** l'élément d'appui fixe est formé par un mandrin de fixation, sur lequel peut être emmanché l'alésage de l'axe de piston de la tige (12).

4. Dispositif selon la revendication 2, **caractérisé en ce que** l'élément d'appui fixe comporte un évidement, sur lequel peuvent être appliquées au moins des parties de la surface extérieure de la tige de l'extrémité de la tige.

5. Dispositif selon la revendication 1, **caractérisé en ce que** les deux éléments en coin (32) possèdent des surfaces de coin (33) ayant des angles d'inclinaison identiques.

6. Dispositif selon la revendication 5, **caractérisé en ce que** les surfaces de coin (33) des éléments en coin (32) sont disposées dans des directions d'inclinaison opposées et qu'il est prévu un vérin hydraulique, dont une surface frontale coopèrent avec un élément en coin (32), et dont le piston (95) coopère avec l'autre élément en coin (32).

7. Dispositif selon la revendication 1 ou 6, **caractérisé en ce que** les éléments d'appui (24) sont reliés respectivement à la tige (50) d'un piston d'appui (51).

8. Dispositif selon la revendication 7, **caractérisé en ce que** les éléments d'appui (24) sont disposés respectivement directement sur l'extrémité avant de la tige de piston (50).

9. Dispositif selon une ou plusieurs des revendications précédentes, **caractérisé en ce qu'**il est prévu un bâti de machine, sur lequel le dispositif est monté au moyen d'éléments d'amortissement.

10. Dispositif selon une ou plusieurs des revendications précédentes, **caractérisé en ce qu'**un dispositif de transport, au moyen duquel la bielle peut être insérée à partir du haut dans le dispositif et en être à nouveau retirée vers le haut, est disposé au-dessus du dispositif fixe.

11. Dispositif selon une ou plusieurs des revendications précédentes, **caractérisé en ce qu'**au-dessous du dispositif fixe est disposé un dispositif de transport cadencé, à partir duquel la bielle est soulevée vers le haut dans le dispositif, est retenue dans ce dernier pendant l'opération de rupture et est ensuite à nouveau abaissée dans ce dernier.

12. Dispositif selon la revendication 1, **caractérisé en ce que** les deux éléments en coin (32, 32), qui sont en vis-à-vis l'un de l'autre, sont retenus de manière à déplaçables, dans un évidement (34), qui s'étend essentiellement perpendiculairement à l'axe longitudinal de la bielle (12), et prennent appui sur la surface supérieure de l'évidement (34) contre la partie fixe (4) du dispositif.

13. Dispositif selon une ou plusieurs des revendications précédentes, **caractérisé en ce qu'**une extrémité arrière, tournée à l'opposé du chapeau (26) d'un élément d'appui respectif (34) que l'on peut faire avancer, est élargie jusqu'à une pièce de contact (30), qui s'applique contre un élément en coin associé (32), par l'intermédiaire de sa surface en coin (33).

14. Dispositif selon la revendication 13, **caractérisé en ce que** l'élément de contact (3) s'applique de manière à pouvoir glisser sur la surface en coin (33).

15. Dispositif selon une ou plusieurs des revendications précédentes, **caractérisé en ce que** les deux éléments en coin, qui sont opposés à l'un à l'autre, sont entraînés par l'intermédiaire d'un vérin hydraulique commun (44).
